Europäisches Patentamt

European Patent Office

Office européen des brevets

(19)

(11) Numéro de publication: **0 243 391**
**B1**

(12) **FASCICULE DE BREVET EUROPEEN**

(45) Date de publication du fascicule du brevet: **16.08.90**

(51) Int. Cl.⁵: **A 61 C 11/00**

(21) Numéro de dépôt: **86905868.5**

(22) Date de dépôt: **17.10.86**

(86) Numéro de dépôt international:
**PCT/FR86/00357**

(87) Numéro de publication internationale:
**WO 87/02234 23.04.87 Gazette 87/09**

(54) **SIMULATEUR D'OCCLUSION.**

(30) Priorité: **18.10.85 FR 8515524**

(43) Date de publication de la demande:
**04.11.87 Bulletin 87/45**

(45) Mention de la délivrance du brevet:
**16.08.90 Bulletin 90/33**

(84) Etats contractants désignés:
**AT BE CH DE FR GB IT LI NL SE**

(56) Documents cités:
**DE-B-1 262 504**
**DE-C- 814 924**
**FR-A- 788 623**
**US-A-2 119 579**
**US-A-2 621 407**

(73) Titulaire: **Berceaux, Pierre**
**39, boulevard Henri Henrot**
**F-51100 Reims (FR)**

(72) Inventeur: **Berceaux, Pierre**
**39, boulevard Henri Henrot**
**F-51100 Reims (FR)**

(74) Mandataire: **Gérardin, Robert Jean René**
**PROT'INNOV INTERNATIONAL SA Résidence de**
**l'Observatoire avenue Georges Clémenceau**
**Boîte Postale 2764**
**F-51066 Reims Cédex (FR)**

## Description

La présente invention concerne un simulateur d'occlusion pour prothèses dentaires reproduisant les mouvements de la mandibule.

Actuellement, les prothésistes dentaires utilisent des occluseurs, à simples charnières, permettant d'obtenir un déplacement du haut vers le bas, complété, parfois, par un mouvement de diduction, transmis par le modèle reproduisant le maxillaire supérieur. Le mouvement de propulsion est reproduit, lui aussi, par un mouvement vers l'avant du modèle supérieur; ceci par l'intermédiaire de mécanismes assez compliqués.

On connaît déjà un simulateur d'occlusion correspondant au préambule de la revendication 1 (brevet de la République Fédérale d'Allemagne DE—A—1.262.504). Le système de biellettes, de rotules et d'axe d'articulation qu'il comporte, permet de positionner les modèles dans l'espace l'un par rapport à l'autre mais ne permet pas, par contre, de communiquer à ceux-ci les différents mouvements de la mandibule par rapport au maxillaire, reproduisant les mouvements de diduction et de propulsion.

Le simulateur d'occlusion selon l'invention a pour but de remédier à ces inconvénients, car, avec celui-ci, en effet, les différents mouvements de la mandibule sont reproduits d'une façon simple et complète et les modèles, reproduisant la bouche du patient sont solidarisés à l'occluseur, par l'intermédiaire de vis solidaires des branches de ce dernier.

Ce simulateur d'occlusion se caractérise principalement en ce que le porte-fourche inférieur est rappelé en permanence dans le plan de symétrie longitudinal du porte-fourche supérieur par des pistons portés par le porte-fourche inférieur rappelé, par des ressorts, contre des lamages réalisés dans la paroi interne de flasques de guidage, fixés de chaque côté du porte-fourche supérieur, en ce que le débattement du porte-fourche inférieur par rapport à la rotule de la biellette est limité transversalement par les flasques et longitudinalement, vers l'arrière, par le talon de la fourche inférieure et le bord avant des flasques et, vers l'avant, par les rebords des lamages contre lesquels la tête des pistons de rappel transversal du porte-fourche inférieur viennent prendre appui, en ce que les fourches sont fixées temporairement aux porte-fourches par encliquetage, par l'intermédiaire de deux tétons à gorge solidaires des fourches, de deux cavités cylindriques percées dans la face avant des portes-fourches et de deux biellettes, poussées par des ressorts, montées chacune dans un conduit disposé perpendiculairement aux cavités cylindriques, dans le plan correspondant à la position de la gorge des tétons, en ce que l'axe d'articulation du porte-fourche supérieur, par rapport à la biellette, est monté dans un orifice, disposé transversalement à une ouverture oblongue située dans le plan de symétrie longitudinal du porte-fourche, dans laquelle pénètre l'extrémité supérieure de la biellette, en ce que le porte-fourche inférieur est constitué de deux parties parallélépipédiques superposées comportant chacune, dans leur face de contact, une empreinte hémisphérique disposées en opposition l'une de l'autre pour constituer une cavité sphérique dans laquelle est logée la rotule située à la partie inférieure de la biellette d'articulation, après avoir fait passer la biellette par un orifice cylindrique de diamètre supérieur à celui de la tige de la biellette percé dans la partie supérieure du porte-fourche inférieur dans l'axe de l'empreinte hémisphérique aménagée dans la face postérieure de celle-ci et en ce que les modèles reproduisant la bouche du patient sont fixés temporairement sur les fourches par l'intermédiaire de vis pointeaux à bouton molette.

La biellette est décolletée sur une certaine longueur au dessus de la rotule afin de permettre un débattement latéral (α) du porte-fourche inférieur par rapport à la biellette.

L'écartement (X) des deux parties superposées constituant le porte-fourche inférieur est réglable par l'intermédiaire de ressorts à débattement contrôlé par l'intermédiaire de vis à bouton molette.

Les ressorts de réglage de l'écartement (X) sont montés dans des trous borgnes percés en vis à vis dans chacune des faces de contact des parties superposées constituant le porte-fourche inférieur.

Les ressorts de rappel des pistons sont des ressorts hélicoïdaux dont l'une des extrémités est logée dans un trou borgne percé dans le côté du porte-fourche inférieur et dont l'autre prend appui derrière la collerette formant la tête des pistons.

La longueur de la tige des pistons est un peu supérieure à la largeur de l'espace existant entre le porte-fourche inférieur et chacun des flasques.

Les avantages obtenus, grâce à cette invention, consistent essentiellement en ceci que le simulateur d'occlusion dont il s'agit, permet la reproduction des mouvements de la mandibule par un système simple, soit: ouverture et fermeture, diduction et propulsion. Le système de fixation, par encliquetage, des fourches sur les portes-fourches permet de combiner toute une gamme de celles-ci avec un seul simulateur. Ce simulateur d'occlusion permet la réalisation de toutes prothèses ne demandant pas l'utilisation d'un arc facial; la capacité de l'appareil étant fonction de sa taille.

D'autres caractéristiques et avantages apparaîtront dans la description qui va suivre d'un simulateur d'occlusion réalisé selon l'invention, donné à un titre d'exemple non limitatif au regard des dessins annexés, sur lesquels:

La figure 1 représente, une vue en coupe longitudinale de l'ensemble du simulateur.

La figure 2 représente, une vue de dessus du simulateur.

La figure 3 représente, une vue de dessus en coupe transversale du simulateur.

La figure 4 représente, une vue arrière, en coupe selon l'axe de la biellette du simulateur.

La figure 5 représente, une vue en coupe longitudinale du simulateur, sur laquelle le porte-fourche inférieur est situé en butée arrière, avec indication, en trait mixte, de la position correspondant au débattement maximum vers l'avant.

La figure 6 réprésente, une vue arrière du simulateur d'occlusion sur laquelle, le porte-fourche inférieur est incliné latèralement d'un angle α avec une liberté de débattement vertical de valeur X.

Les figures représentent un simulateur d'occlusion pour prothèses dentaires, reproduisant les mouvements de la mandibule, comprenant essentiellement une fourche supérieure 1, reliée à un porte-fourche supérieur 2 par l'intermédiaire de deux tétons 3a, de billes 4 et de ressorts 5; une biellette 6 reliée au porte-fourche supérieur 2 par un axe 7 maintenu en place par des flasques 8 et 9, limitant le débattement latéral du porte-fourche inférieur 10, et, à un porte-fourche inférieur 10, par l'intermédiaire d'une rotule 6b montée dans une cavité sphérique constituée d'hémisphères $10a_1$ et $10b_1$ réalisées dans les deux parties 10a et 10b constituant le porte-fourche inférieur 10.

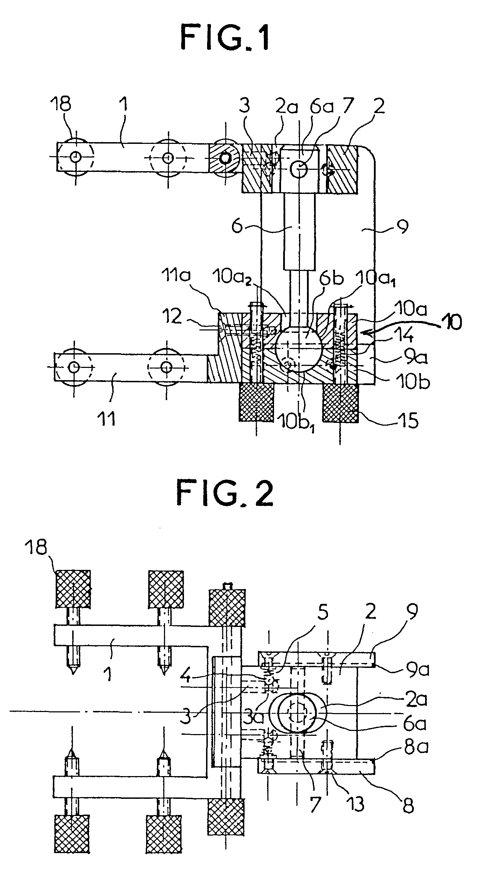

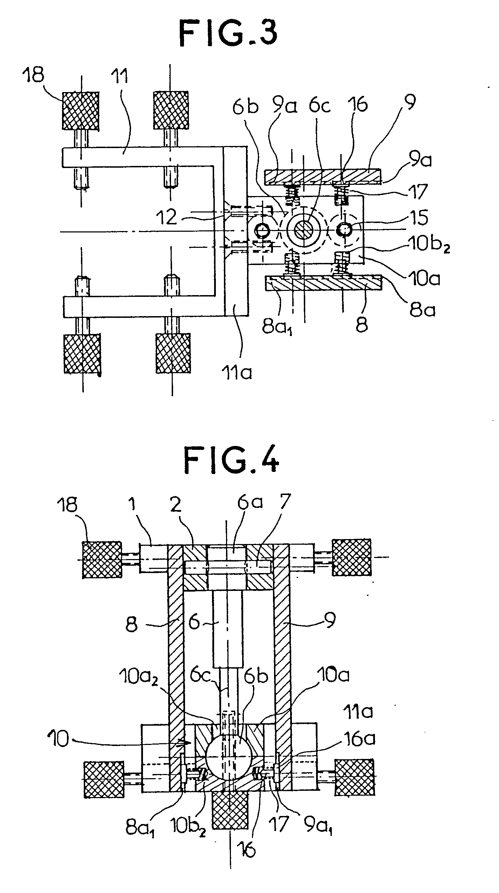

En examinant plus particulièrement les figures 1 à 4, on remarque que la fourche supérieure articulée 1 se fixe temporairement sur l'avant du porte-fourche supérieur 2 par l'intermédiaire de deux tétons 3 à gorge 3a, dans laquelle s'insère une bille 4 poussée par un ressort 5, alors que la fourche inférieure 11 se fixe sur l'avant de la partie supérieure 10a du porte-fourche inférieur 10, par l'intermédiaire d'un talon 11a et de vis 12. Le porte-fourche supérieur 2 est relié à la biellette 6, dont l'extrémité supérieure 6a est maintenue dans une ouverture oblongue 2a, située dans le plan de symétrie dudit porte-fourche supérieur 2, par l'intermédiaire d'un axe 7 maintenu dans son logement par les flasques 8 et 9 fixés sur les côtés du porte-fourche supérieur 2 par l'intermédiaire de vis 13. Le porte-fourche inférieur 10 est relié à la rotule 6b de la biellette 6 par l'intermédiaire de deux parties 10a et 10b comportant respectivement les empreintes hémisphèriques $10a_1$ et $10b_1$ dans leur face de contact qui constituent après assemblage une cavité sphérique emprisonnant la rotule 6b après passage de la tige de la biellette 6 à travers l'orifice cylindrique $10a_2$ percé dans la partie supérieure 10a, dans l'axe de l'empreinte hémisphèrique $10a_1$. Des ressorts 14, tendant à écarter les parties 10a et 10b du porte-fourche inférieur, sont montés dans des trous borgnes percés en vis à vis dans chacune des faces de contact desdites parties 10a et 10b. Le débattement de ces ressorts est limité par des vis à tête moletée 15, qui permettent de régler la valeur de l'écartement X des deux parties 10a et 10b constituant le porte-fourche inférieur 10. La biellette 6 comporte une partie décolletée 6c d'un diamètre déterminé en fonction du débattement angulaire α maximum choisi. Le porte-fourche inférieur 10 est rappelé en permanence, dans le plan de symétrie de l'ensemble, par l'intermédiaire de pistons 16 reliés à la partie inférieure 10b du porte-fourche inférieur 10 par l'intermédiaire de ressorts hélicoïdaux 17 dont l'une des extrémités est introduite dans un trou borgne $10b_2$

percé dans la partie inférieure $10_b$ et dont l'autre prend appui contre la collerette 16a formant la tête des pistons 16, de façon à maintenir le contact permanent des pistons avec la surface des lamages 8a et 9a réalisés dans la face interne des flasques 8 et 9, à la partie inférieure de ceux-ci. La longueur de la tige des pistons 16 est déterminée de façon à permettre un désalignement de ceux-ci, par rapport à l'axe des trous borgnes $10b_2$ servant de logement aux ressorts 17, compatible avec le décalage angulaire α maximum autorisé pour le porte-fourche inférieur 10.

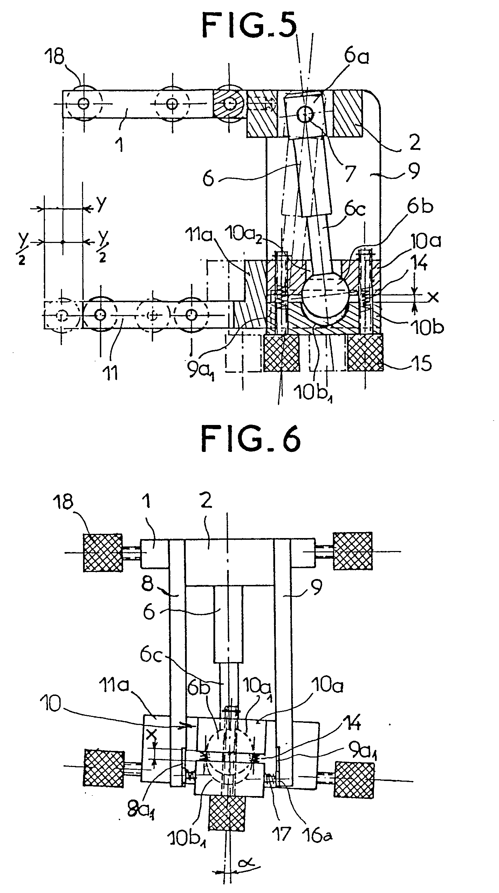

En examinant les figures 5 et 6, on remarque que ce simulateur d'occlusion permet la combinaison de mouvements d'articulation des deux porte-fourches, à des mouvements de diduction et de propulsion, par l'intermédiaire de l'axe d'articulation 7 de la rotule 6b et de vis 15. L'amplitude de ces mouvements est limitée, sur l'arrière, par le talon 11a de la fourche inférieure 11, sur l'avant, par la mise en butée des pistons avant contre les rebords avant $8a_1$ et $9a_1$ du lamage réalisé dans la paroi interne des flasques; en inclinaison par le bord supérieur de l'orifice cylindrique $10a_2$ percé dans la partie supérieure 10a du porte-fourche inférieur 10.

L'action sur les vis 15 permet en introduisant un jeu X entre les parties supérieure 10a et inférieure 10b du porte-fourche, d'obtenir un changement d'angulation, s'adaptant au cas traité, en disposant d'un débattement vertical dudit porte-fourche inférieur 10 par rapport au porte-fourche supérieur 2. L'amplitude Y du débattement longitudinal se répartit également d'une valeur Y/2 par rapport à la position de concordance des deux fourches. Les modèles sont fixés aux fourches par les vis pointeaux 18.

**Revendications**

1. Simulateur d'occlusion pour prothèse dentaire reproduisant les mouvements de la mandibule, constitué essentiellement de deux fourches (1, 11), représentant respectivement le maxillaire et la mandibule, reliées par une biellette (6), la fourche supérieure articulée (1), représentant le maxillaire, étant reliée à l'une des extrémités (6a) de la biellette (6) par l'intermédiaire d'un porte-fourche (2) et d'un axe d'articulation (7); la fourche inférieure (11), représentant le mandi-bule, étant reliée à l'autre extrémité de la biellette (6) par l'intermédiaire d'un porte-fourche (10) et d'une rotule (6b), caractérisé en ce que le porte-fourche inférieur (10) est rappelé en permanence dans le plan de symétrie longitudinal du porte-fourche supérieur (2) par des pistons (16) portés par le porte-fourche inférieur (10) rappelé, par des ressorts (17), contre des lamages (8a, 9a) réalisés dans la paroi interne de flasques de guidage (8, 9), fixés de chaque côté du porte-fourche supérieur, en ce que le débattement du porte-fourche inférieur (10) par rapport à la rotule (6b) de la biellette (6) est limité transversalement par les flasques (8, 9) et longitudinalement, vers l'arrière, par le talon (11a) de la fourche inférieure (11) et le bord avant des flasques (8, 9) et, vers l'avant, par les rebords (8a₁ et 9a₁) des lamages contre lesquels les têtes des pistons (16) de rappel transversal du porte-fourche inférieur (10) viennent prendre appui, en ce que les fourches (1, 11) sont fixées temporairement aux porte-fourches (2, 10) par encliquetage, par l'intermédiaire de deux tétons à gorge (3) solidaires des fourches, de deux cavités cylindriques percées dans la face avant des portes-fourches (2, 10) et de deux billes (4), poussées par des ressorts (5), montées chacune dans un conduit disposé perpendiculairement aux cavités cylindriques, dans le plan correspondant à la position de la gorge (3a) des tétons (3), en ce que l'axe d'articulation (7) du porte-fourche supérieur (2), par rapport à la biellette (6), est monté dans un orifice, disposé transversalement à une ouverture oblongue (2a) située dans le plan de symétrie longitudinal du porte-fourche (2), dans laquelle pénètre l'extrémité supérieure (6a) de la biellette (6), en ce que le porte-fourche inférieur (10) est constitué de deux parties parallélépipédiques superposées (10a, 10b) comportant chacune, dans leur face de contact, une empreinte hémisphérique (10a₁, 10b₁) disposées en opposition l'une de l'autre pour constituer une cavité sphérique dans laquelle est logée la rotule (6b) située à la partie inférieure de la biellette d'articulation (6), après avoir fait passer la biellette (6) par un orifice cylindrique (10a₂) de diamètre supérieur à celui de la tige de la biellette (6) percé dans la partie supérieure (10a) du porte-fourche inférieur dans l'axe de l'empreinte hémisphérique (10a₁) aménagée dans la face postérieure de celle-ci.

2. Simulateur d'occlusion selon la revendication 1, caractérisé en ce que la tige de la biellette (6) est décolletée sur une certaine longueur au dessus de la rotule (6b) afin de permettre un débattement latéral (α) du porte-fourche inférieur (10) par rapport à la biellette (6).

3. Simulateur d'occlusion selon la revendication 1, caractérisé en ce que l'écartement (X) des deux parties superposées (10a, 10b) constituant le porte-fourche inférieur (10) est réglable par l'intermédiaire de ressorts (14) à débattement contrôlé par l'intermédiaire de vis à bouton molette (15).

4. Simulateur d'occlusion selon la revendication 3, caractérisé en ce que les ressorts (14) sont montés dans des trous borgnes percés en vis à vis dans chacune des faces de contact des parties superposées (10a, 10b) constituant ls porte-fourche inférieur (10).

5. Simulateur d'occlusion selon la revendication 1, caractérisé en ce que les ressorts (17) de rappel des pistons (16) sont des ressorts hélicoïdaux dont l'une des extrémités est logée dans un trou borgne (10b₂) percé dans le côté du porte-fourche inférieur (10) et dont l'autre prend appui derrière la collerette (16a) formant la tête des pistons (16).

6. Simulateur d'occlusion selon les revendications 1 et 5, caractérisé en ce que la longueur de la tige des pistons (16) est un peu supérieure à la largeur de l'espace existant entre le porte-fourche inférieur (10) et chacun des flasques (8, 9).

## Patentansprüche

1. Okkludator für eine Zahnprothese zur Wiedergabe der Kieferbewegungen, bestehend im wesentlichen aus zwei jeweils Oberkiefer und Unterkiefer darstellenden Gabeln (1, 11), die mittels eines Schwenkarmes (6) miteinander verbunden sind, wobei die den Oberkiefer darstellende schwenkbare obere Gabel (1) mittels eines Gabelträgers (2) und einer Schwenkachse (7) mit einem der Enden (6a) des Schwenkarmes (6) verbunden ist, und die den Unterkiefer darstellende untere Gabel (11) mittels eines Gabelträgers (10) und eines Kugelgelenkes (6b) mit dem anderen Ende des Schwenkarmes (6) verbunden ist, dadurch gekennzeichnet, daß der untere Gabelträger (10) immer wieder in die Längssymmetrieebene des oberen Gabelträgers (2) durch Kolben (16), die von dem zurückgestellten unteren Gabelträger (10) getragen werden, und durch Federn (17) gegen Plansenken (8a, 9a), die in der Innenwand der an jeder Seite des oberen Gabelträgers befestigten Führungsbacken (8, 9) ausgebildet sind, zurückgestellt wird, daß das Federungsspiel des unteren Gabelträgers (10) bezüglich des Kugelgelenkes (6b) des Schwenkarmes (6) in der Querrichtung durch die Backen (8, 9) begrenzt ist und in der Längsrichtung nach hinten durch den Absatz (11a) der unteren Gabel (11) und die Vorderkante der Backen (8, 9), und nach vorne durch die Kanten (8a₁ und 9a₁) der Plansenken, gegen die die Böden der Kolben (16) zur Rückstellung des unteren Gabelträgers (10) in die Querrichtung zur Anlage kommen, daß die Gabeln (1, 11) zeitweise mit den Gabelträgern (2, 10) durch die Rastverbindung verbunden sind, mittels zweier mit den Gabeln fest verbundener Hohlkehlenzapfen (3), zweier in die Vorderseite der Gabelträger (2, 10) gebohrter zylindrischer Aushöhlungen, und zweier Kugeln (4), die durch Federn (5) belastet und jeweils in einer Führung befestigt sind, die senkrecht zu den zylindrischen Aushöhlungen in der Ebene, die der Position der Hohlkehle (3a) der Zapfen (3) entspricht, angeordnet sind, daß die Schwenkachse (7) des oberen Gabelträgers (2) für den Schwenkarm (6) in einer Öffnung angeordnet ist, die quer zu einer länglichen Öffnung (2a) angeordnet ist, die in der Längssymmetrieebene des Gabelträgers (2) liegt und in die das obere Ende (6a) des Schwenkarmes (6) eingreift, und daß der untere Gabelträger (10) aus zwei übereinander angeordneten quaderförmigen Teilen (10a, 10b) besteht, die jeweils in ihrer Kontaktfläche eine halbkugelförmige Vertiefung (10a₁, 10b₁) aufweisen, die einander gegenüberliegen und eine kugelförmige Aushöhlung bilden, in der das am unteren Teil des Schwenkarmes (6) angeordnete Kugelgelenk (6b) Aufnahme findet, nachdem der Schwenkarm (6) durch eine zylindrische Öffnung (10a₂) geführt wurde, deren Durchmesser größer als der Schaft des Schwenkarmes (6) ist und die in das obere Teil (10a) des unteren Gabelträgers in der Achse der halbkugelförmigen Vertiefung (10a₁) gebohrt ist, die in der ihr nachfolgenden Fläche angeordnet ist.

2. Okkludator nach Anspruch 1, dadurch gekennzeichnet, daß der Schaft des Schwenkarmes (6) über eine gewisse Länge oberhalb des Kugelgelenkes (b) abgedreht ist, um ein seitliches Federungsspiel (α) des unteren Gabelträgers (10) relativ zum Schwenkarm (6) zu ermöglichen.

3. Okkludator nach Anspruch 1, dadurch gekennzeichnet, daß der Abstand (X) der beiden übereinander angeordneten, den unteren Gabelträger (10) bildenden Teile (10a, 10b) mit Hilfe von Federn (14) regulierbar ist, deren Federungsspiel mit Hilfe von Riffelkopfschrauben (15) einstellbar ist.

4. Okkludator nach Anspruch 3, dadurch gekennzeichnet, daß die Federn (14) in Sackbohrungen angeordnet sind, die jeweils einander gegenüberliegend in jede der Kontaktflächen der den unteren Gabelträger (10) bildenden übereinanderliegenden Teile (10a, 10b) gebohrt sind.

5. Okkludator nach Anspruch 1, dadurch gekennzeichnet, daß die Federn (17) zur Rückstellung der Kolben (16) Spiralfedern sind, von denen jeweils das eine Ende in einer seitlich in den unteren Gabelträger (10) gebohrten Sackbohrung (10b$_2$) angeordnet ist, und das andere Ende sich gegen den Flansch (16a) abstützt, der den Boden der Kolben (16) bildet.

6. Okkludator nach Anspruch 1 und 5, dadurch gekennzeichnet, daß die Länge des Schaftes der Kolben (16) geringfügig größer als die Breite des zwischen dem unteren Gabelträger (10) und jeder der Backen (8, 9) vorhandenen Zwischenraumes ist.

## Claims

1. An occlusion simulator for a dental prosthesis reproducing the movements of the mandible, composed essentially of two forks (1, 11), respectively representing the maxilla and the mandible, connected by means of a link (6), the pivoted upper fork (1) representing the maxilla being connected to one of the ends (6a) of the link (6) by means of a fork-carrier (2) and a pivoting axis (7); the lower fork (11) representing the mandible being connected to the other end of the link (6) by means of a fork support (10) and a joint member (6b), characterized in that the lower fork support (10) is permanently recalled in the longitudinal plane of symmetry of the upper fork support (2) by pistons (16) supported by the lower fork support (10) recalled by springs (17) against facings (8a, 9a) made in the inner wall of the guide flanges (8, 9) secured on each side of the upper fork support, in that the movement of the lower fork support (10) relative to the joint member (6b) of the link (6) is limited transversally by the flanges (8, 9) and longitudinally, towards the rear, by the heel (11a) of the lower fork (11) and the front edge of the flanges (8, 9) and, forward, by

the edges (8a$_1$ and 9a$_1$) of the facings against which the heads of the pistons (16) for the transversal recall of the lower fork support (10) come to act, in that the forks (1, 11) are secured temporarily to the fork supports (2, 10) by latching, by means of two grooved studs (3) connected with the forks, of two cylindrical cavities drilled in the front face of the fork supports (2, 10) and two balls (4) pushed by springs (5), each ball being mounted in a duct arranged perpendicularly to the cylindrical cavities, in the plane corresponding to the position of the throat (3a) of the studs (3), in that the pivoting axis (7) of the upper fork carrier (2), relative to the link (6), is mounted in a hole, placed transversally to an oblong opening (2a) situated in the longitudinal plane of symmetry of the fork support (2), which the upper end (6a) of the link (6) enters, in that the lower fork support (10) is made up of two superimposed parallelepipedic parts (10a, 10b) each comprising, in their contact face, a semi-spherical impression (10a$_1$, 10b$_1$) oppositely placed to form a spherical cavity in which the joint member (6b) situated at the lower part of the pivoting link (6) is housed, after having passed the link (6) through a cylindrical hole (10a$_2$) having a diameter greater than that of the rod of the link (6), drilled in the upper part (10a) of the lower fork support in the axis of the semi-spherical impression (10a$_1$) made in the rear face thereof.

2. An occlusion simulator according to claim 1, characterized in that the rod of the link (6) is undercut along a certain length above the joint member (6a) so as to permit lateral movement (α) of the lower fork support (10) relative to the link (6).

3. An occlusion simulator according to claim 1, characterized in that the space (x) between the two superimposed parts (10a, 10b) constituting the lever fork support (10) is adjustable by means of springs (14) with movement controlled by means of knurled knob screws (15).

4. An occlusion simulator according to claim 3, characterized in that the springs (14) are mounted in blind holes drilled facing each other in each of the contact faces of the superimposed parts (10a, 10b) constituting the lower fork support (10).

5. An occlusion simulator according to claim 1, characterized in that the springs (17) for recalling the pistons (16) are helical springs one of the ends of which is housed in a blind hole (10b$_2$) drilled in the side of the lower fork support (10) and the other of which acts behind the collar (16a) constituting the head of the pistons (16).

6. An occlusion simulator according to claims 1 and 5, characterized in that the length of the rod of the pistons (16) is slightly greater than the width of the space existing between the lower fork support (10) and each of the flanges (8, 9).

## FIG.1

## FIG.2

1

# FIG.3

# FIG.4

# FIG.5

# FIG.6